(19) Europäisches Patentamt

European Patent Office

Office européen des brevets

(11) **EP 1 020 058 B1**

(12) **EUROPÄISCHE PATENTSCHRIFT**

(45) Veröffentlichungstag und Bekanntmachung des Hinweises auf die Patenterteilung:
**24.04.2002   Patentblatt 2002/17**

(51) Int Cl.⁷: **H04L 27/233**

(21) Anmeldenummer: **98956779.7**

(86) Internationale Anmeldenummer:
**PCT/DE98/02777**

(22) Anmeldetag: **18.09.1998**

(87) Internationale Veröffentlichungsnummer:
**WO 99/17510 (08.04.1999 Gazette 1999/14)**

(54) **VERFAHREN ZUR SUCHE NACH PILOTTÖNEN**

PILOT SIGNAL SEARCH METHOD

PROCEDE DE RECHERCHE DE SIGNAUX PILOTES

(84) Benannte Vertragsstaaten:
**DE FI FR GB IT SE**

(30) Priorität: **30.09.1997   DE 19743191**
**30.10.1997   DE 19748030**

(43) Veröffentlichungstag der Anmeldung:
**19.07.2000   Patentblatt 2000/29**

(73) Patentinhaber: **Infineon Technologies AG**
**81669 München (DE)**

(72) Erfinder:
• **HARTMANN, Ralf**
**D-81377 München (DE)**
• **YANG, Bin**
**D-81735 München (DE)**

(74) Vertreter: **Graf Lambsdorff, Matthias, Dr. et al**
**Patentanwälte**
**Lambsdorff & Lange**
**Dingolfinger Strasse 6**
**81673 München (DE)**

(56) Entgegenhaltungen:
EP-A- 0 387 720    EP-A- 0 546 614
US-A- 4 896 336    US-A- 5 151 926
US-A- 5 390 216

• ALBERTY T ET AL: "DIGITALER DEMODULATOR FUER DEN MOBILEN SATELLITENFUNK" NACHRICHTENTECHNISCHE BERICHTE, Nr. 5, 1. November 1988, Seiten 83-92, XP000233882

**Beschreibung**

Die vorliegende Erfindung betrifft allgemein ein Verfahren zur Suche nach Pilottönen. Das sind Sinusschwingungen bekannter Frequenz in einem beliebigen Signal.

In Kommunikationssystemen, insbesondere in Mobilfunksystemen, hat man häufig die Aufgabe, nach Pilottönen zu suchen. Beispielsweise erfolgt in digitalen Mobilfunksystemen, die nach dem GSM/DCS1800/PCS1900 Standard arbeiten, die Organisation des Funkverkehrs über Organisationskanäle. Eine Mobilstation, die über eine Feststation mit dem Netz Verbindung aufnehmen möchte, muß als erstes diesen Organisationskanal detektieren und aufsuchen. Dazu gehört die Suche nach festgelegten Impulsfolgen. Beim oben angegebenen System werden dazu sogenannte "frequency correction bursts (FCB)" verwendet, wobei es sich hierbei um eine Impulsfolge von 148 Nullen handelt.

Im hier betrachteten System wird für die Übertragung das sogenannte GMSK-Modulationsverfahren (Gaussian Minimum Shift Keying) verwendet. Dabei wird eine Trägerfrequenz FT (beispielsweise 900 MHz) mit dem zu übertragenden Signal, also hier auch mit dem speziell interessierenden FCB-Signal moduliert. Die sich ergebende Frequenz liegt bei FT+67,71 kHz, das heißt um 67,71 kHz über der Trägerfrequenz. Die FCB-Impulsfolge von 148 Nullen wird dadurch in ein reines Sinussignal überführt. Im Basisband bedeutet das, daß die Phasendifferenz benachbarter Abtastwerte im Idealfall (ohne Kanalverzerrung und Rauschen) 90° beträgt, wenn man davon ausgeht, daß eine Abtastung im Bittakt (270,83 kHz) erfolgt.

Aus dem Stand der Technik sind verschiedene Verfahren zur FCB-Suche bekannt. So ist beispielsweise in dem Artikel "Anfangssynchronisation der Mobilstation im D-Netz" von G. Frank und W. Koch, PKI Tech. Mitt. 1 (1990), Seiten 43-49 ein Verfahren zur FCB-Suche beschrieben. Bei diesem Verfahren beginnt die FCB-Suche mit einer Frequenzverschiebung durch eine Multiplikation aller (I,Q)-Abtastwerte des empfangenen Signals mit $\exp(-jk\pi/2)$. Jeder Abtastwert Z zum Zeitpunkt k läßt sich in der komplexen Ebene darstellen als $Z(k) = I(k) + jQ(k)$. Das heißt, das empfangene Signal wird um 67,71 kHz nach unten verschoben, so daß seine Mittenfrequenz nach der Frequenzverschiebung 0 Hz beträgt. Es erfolgt anschließend eine Tiefpaßfilterung des Signals. Wenn es sich um das FCB-Signal handelt, so passiert dieses das Filter; andere Signale werden hingegen wegen ihrer großen Bandbreite weitgehend unterdrückt. Es erfolgt anschließend eine Betragsbildung des gefilterten Signals, was im Idealfall einen rechteckähnlichen Impuls von der Dauer eines FCBs ergibt. In der übrigen Zeit herrscht dagegen aufgrund der Modulation mit zufälligen Datenbits ein rauschähnliches Signal. Für den rechteckähnlichen Impuls läßt sich ein optimales Suchfilter angeben. Es entspricht einer gleitenden Mittelwertbildung über die Dauer eines FCB. Ein FCB gilt als gefunden, wenn der Maximalwert des gefilterten Signals eine vorher festgelegte Schwelle überschreitet. Die Position des Maximalwertes markiert das Ende des detektierten FCBs.

Das in diesem Aufsatz beschriebene Verfahren hat den Nachteil, daß der Maximalwert des gefilterten Signals von den momentanen Signalamplituden abhängt und deshalb starken Fading-Schwankungen unterworfen ist. Für eine sichere FCB-Suche ist also eine adaptive Amplitudenregelung notwendig. Auch der Tiefpaß muß von hoher Güte sein und seine Implementierung ist deswegen aufwendig. Darüber hinaus ist dieses Verfahren sehr empfindlich gegenüber einer Frequenzverstimmung zwischen der Mobil- und Basisstation. In der Praxis ist daher eine Mittelung des Maximalwertes über mehrere Beobachtungsintervalle erforderlich.

Ein weiteres Verfahren ist in dem Artikel "Synchronisation einer Mobilstation im GSM-System DMCS 900 (D-Netz)" von H. Neuner, H. Bilitza, S. Gärtner in Frequenz 47 (1993)3-4, Seiten 66-72 beschrieben. Bei diesem Verfahren wird die Phasendifferenz jedes vierten Abtastwertes des empfangenen Signals ausgewertet. Dem Verfahren liegt die Beobachtung zugrunde, daß für die Dauer eines FCBs solche Phasendifferenzen im Idealfall null sind. Da, wie oben schon angegeben, die Phasendifferenz zweier benachbarter Abtastwerte 90 Grad beträgt, beträgt die Phasendifferenz zwischen vier Abtastwerten 4x90 = 360 Grad oder null Grad. Durch einen für jede Phasendifferenz neu berechneten Gültigkeitsbereich werden Störungen (Fading) berücksichtigt. Ein FCB gilt als gefunden, wenn eine hinreichend große Anzahl von vernachlässigbar kleinen Phasendifferenzen vorliegt.

Problematisch bei diesem Verfahren ist die Positionsbestimmung des FCBs, da nur jeder vierte Abtastwert ausgewertet wird. Da das hier beschriebene Verfahren die Bestimmung der Phasendifferenz zwischen Abtastwerten erforderlich macht, muß, um aus den Quadraturkomponenten des abgetasteten empfangenen Signals die Phase des Abtastwertes zu berechnen, die Arkustangensfunktion verwendet werden. Dafür liegt aber bei fast allen Signalprozessoren keine Hardwareunterstützung vor, so daß die Berechnung durch eine aufwendige Reihenentwicklung approximiert wird, was entsprechend Rechenzeit benötigt.

Ein drittes Verfahren des Standes der Technik ist ein aus der EP 0 387 720 bekannt gewordenes Verfahren, das dem Verfahren von Frank und Koch ähnelt. Dieses Verfahren benutzt zwei frequenzselektive Kammfilter, von denen ein Filter FCB-Signale mit der Frequenz 67,71 kHz ungehindert durchläßt und das andere Filter FCB-Signale voll sperrt. Von beiden gefilterten Signalen werden Beträge und dann gleitende Mittelwerte gebildet. Anschließend wird der Quotient der beiden Mittelwerte gebildet und mit einem vorher festgelegten Schwellwert verglichen. Unterschreitet der Quotient den Schwellwert, so gilt ein FCB als gefunden.

Die Position des Minimums des Quotienten markiert das Ende des FCB.

Dieses Verfahren wurde bereits in Chipsätzen für GSM-Handies erfolgreich eingesetzt. Da man durch die Quotientenbildung eine Unempfindlichkeit gegenüber Amplitudenschwankungen erreicht, so kann die im Verfahren nach Frank und Koch notwendige Amplitudenregelung entfallen. Dafür benötigt jedoch die zur Quotientenbildung notwendige Division ebenfalls noch relativ viel Rechenzeit. Weiterhin ist das Verfahren empfindlich gegenüber einer Frequenzverstimmung. Bei einer Frequenzverstimmung läßt das eine Filter das Signal nicht mehr vollständig durch, und das andere Filter sperrt das Signal nicht mehr völlig. Die Folge ist, daß der Minimalwert des Quotienten erheblich ansteigt und der bestenfalls für eine minimale Frequenzverstimmung ausgelegte Schwellwert nicht mehr passend ist, und daher die ganze FCB-Suche unsicher wird.

Aus der DE 43 28 584 ist eine Schaltung zum Synchronisieren eines elektronischen Winkelpositionsgebers bekannt geworden. Der Winkelpositionsgeber wird laufend mit der Winkellageänderung eines Rotors synchronisiert. Aus der DE 38 06 428 ist ein Verfahren zum Ermitteln einer in einem Serienbitstrom enthaltenen Bitkombination bekannt geworden. Mit Hilfe eines Suchzyklus wird die Bitkombination nacheinander mit Bits von Vergleichs-Bitkombinationen verglichen. Der Vergleich wird in den möglichen Phasenlagen durchgeführt. Aus der EP 0 228 771 ist ein Vollduplex-Datenübertragungssystem für Teilnehmerschleifen bekannt geworden. Der Empfänger weist dabei einen Pilotphasendetektor auf, der die Phase des ankommenden Pilottones bestimmt. Der Phasendetektor führt dies bezüglich eines örtlichen Pilotphasenbezuges aus. Aus der EP 0 489 880 ist ein Diversity-Kombinationsverfahren bekannt geworden, das HF-Funk-Nachrichtenverbindungssysteme betrifft. Im Rahmen des Verfahrens werden Pilotsymbol-Abtastungen von Informationssymbol-Abtastungen in dem erhaltenen, abgetasteten und demodulierten Signal getrennt. Die Pilotsymbol-Abtastungen werden dann zu vorbestimmten Pilot-Abtastzeitpunkten bearbeitet, um Schätzwerte eines Kanalgewinns zu bestimmen.

Aufgabe der vorliegenden Erfindung ist es, ein Verfahren anzugeben, das die Nachteile der bisher bekannten Verfahren zur FCB-Suche, wie die Empfindlichkeit gegenüber Fadingstörungen oder Frequenzabweichungen überwindet, und das außerdem einfach zu realisieren ist und nur geringe Rechenzeit in Anspruch nimmt.

Die Aufgabe wird durch das erfindungsgemäße Verfahren gemäß Anspruch 1 der vorliegenden Anmeldung gelöst. Das erfindungsgemäße Verfahren verwendet die Idee einer differentiellen Symbolschätzung. Es werden nicht die exakten Phasendifferenzen aufeinanderfolgender (I,Q) Abtastwerte des empfangenen Signals, wie beim Verfahren von Neuner, Bilitza und Gärtner, ermittelt. Statt dessen wird nur untersucht, ob die Phasendifferenzen aufeinanderfolgender Abtastwerte im Intervall [0, $\pi$) oder [-$\pi$, 0) liegt. Beide Fälle entsprechen einem gesendeten Symbol von 1 ("+1") beziehungsweise 0 ("-1") des GMSK-Modulators. Da eine aus 148 Nullen bestehender FCB nach der differentiellen Kodierung auf der Senderseite in 147 Einsen überführt wird, und außerhalb des FCB nahezu gleich viele Einsen und Nullen vorkommen, so kann nach einem FCB gesucht werden, indem nach einem langen, zusammenhängenden Block von Einsen gesucht wird.

Nachfolgend wird das erfindungsgemäße Verfahren im einzelnen beschrieben. Jeder Abtastwert Z des zum Zeitpunkt k empfangenen Signals läßt sich dabei in der komplexen Darstellung angeben als $Z(k) = I(k) + jQ(k)$. Dabei sei $I(k)$ die In-Phase-Komponente des Basisband-Abtastwertes zum Zeitpunkt k und $Q(k)$ die Quadraturkomponente des Basisband-Abtastwertes zum Zeitpunkt k. Bei der erfindungsgemäßen differentiellen Symbolschätzung wird aus den Abtastwerten des. Zeitpunktes k und des vorhergehenden Zeitpunktes k-1 durch Multiplikation der Differenzwert D(k) nach folgender Formel gebildet:

$$D(k) = Q(k)*I(k-1)-I(k)*Q(k-1).$$

Ist $D(k) \geq 0$, so liegt eine Eins (das Symbol a(k) = 1) vor. Ansonsten liegt eine Null (das Symbol a(k) = 0) vor. Das heißt, das Vorzeichen von D(k) gibt im Idealfall das gesendete Symbol a(k) exakt wieder.

Fading-Störungen können dabei vereinzelt zu falschen Symbolschätzungen führen. Deswegen werden die geschätzten Symbole (1 oder 0) mit einem Matchfilter gefiltert. Das heißt, über die geschätzten Symbole wird ein Suchfenster mit der Länge L = 147 geführt. Es wird dabei in einer Art gleitenden Summenbildung die Anzahl der Einsen innerhalb des Suchfensters gezählt. Als Formel läßt sich das folgendermaßen ausdrücken:

$$q(k) = q(k-1)+a(k)-a(k-L),$$

wobei q(k) die Symbolsumme, a(k) das oben geschätzte Symbol und L die Länge des Suchfensters ist. L beträgt im Normalfall 147, da für das Berechnen von D(k) beziehungsweise a(k) immer zwei Abtastwerte verwendet werden, und somit bei 148 Abtastungen nur 147 Werte des Differenzwertes D(k) berechnet werden. Der FCB besteht, wie oben schon angegeben, nach der differentiellen Kodierung auf der Sendeseite aus 147 Einsen, aber er hat an beiden Seiten einen Sicherheitsbereich von je 8,25 Bits (Guardbits). Diese Guardbits weisen immer den Wert Eins auf. Je nach Bedarf wird während der Zeit der Guardbits, die Sendeleistung unverändert beibehalten oder aber herabgefahren (power ramping). Wenn bekannt ist, daß die Sendeleistung auch während des Sendens der Guardbits beibehalten wird, so können diese zusätzlichen Guardbits mit zur Ermittlung des FCBs herangezogen werden. In diesem Fall hätte das Suchfenster dann eine Länge von L = 148+16-1=163. Wenn aber während der Guardbits die Sendeleistung herabgefahren wird, so wird während der Zeit der Guardbits nur ein Rauschen empfangen. Die Guardbits können dann also nicht zur FCB-Ermittlung herangezogen werden. Es muß dann das Fenster mit der Länge L = 147 verwendet werden.

In jedem Fall wird die Symbolsumme q(k) anschließend mit einem Schwellwert S verglichen, und bei Überschreiten des Schwellwertes wird auf das Vorhandensein eines FCB geschlossen.

Die Symbolsumme q(k) (das heißt die Zahl der Einsen in einem Suchfenster der Länge L) kann nur ganzzahlige Werte zwischen 0 und L annehmen. Aufgrund dieser groben Quantisierung kommt es häufig vor, daß die Symbolsumme mehrfach zu äufeinanderfolgenden Zeitpunkten einen Maximalwert annimmt. Für die Positionsbestimmung des FCB ist es daher wichtig, immer nach dem "mittleren Maximum" zu suchen. Eine Suche nach dem ersten auftretenden (linken) oder dem zuletzt auftretenden (rechten) Maximum würde zu einseitig systematischen Fehlern führen. Das zeitliche Auftreten des mittleren Maximums wird ermittelt, indem zunächst der Zeitpunkt festgehalten wird, an dem die Symbolsumme q(k) zum ersten Mal den Schwellwert S überschreitet, und als nächstes der Zeitpunkt festgehalten wird, an dem die Symbolsumme q(k) zum letzten Mal den Schwellwert S überschreitet. Das "mittlere Maximum" liegt dann zeitlich zwischen diesen beiden Werten.

Die Genauigkeit der Suche nach dem FCB ist am höchsten, wenn innerhalb eines FCB ausschließlich Einsen und außerhalb des FCB nur Nullen geschätzt werden. In diesem Fall liefert das Matchfilter ein ausgeprägtes Maximum am Ende des FCB. In der Praxis werden aufgrund der Modulation mit zufälligen Datenbits außerhalb des FCBs nahezu gleich viele Einsen und Nullen geschätzt. Zur Steigerung der Genauigkeit der Suche nach dem FCB ist es daher vorteilhaft, die Phasendifferenz benachbarter Abtastwerte um einen gewissen Winkel (-α) nach hinten zu verschieben. Wenn der Winkel α dabei nicht zu groß gewählt wird (0 < α << 90°), liefert die erfindungsgemäße differentielle Symbolschätzung innerhalb eines FCBs dennoch weiterhin die gewünschten Einsen, da für einen nicht zu groß gewählten Winkel α gilt: 90°-α >> 0. Außerhalb eines FCBs werden jedoch tendenziell mehr Nullen als Einsen geschätzt. Zu beachten ist natürlich, daß der Winkel α nicht zu nahe an 90° liegen darf, da sonst die Symbole innerhalb des FCBs, also die Einsen, durch die Winkelverschiebung in Kombination mit anderen Störungen fälschlicherweise als Nullen geschätzt werden. Es ist empfehlenswert, den Wert für α so zu wählen, daß er einem ganzzahligen Teiler von 90° entspricht, so daß sich bei den internen komplexen Rechnungen, bei denen cos(kα) und sin(kα) berechnet werden müssen, dieselbe Berechnungtabelle verwenden läßt. Untersuchungen, bei denen verschiedene Signalstörungen berücksichtigt wurden, haben gezeigt, daß ein vernünftiger Wert von α bei α = 90°/4 = 22,5° liegt.

Gleichzeitig ergibt diese Phasenverschiebung eine Erhöhung der Robustheit des Verfahrens gegenüber einer Frequenzverstimmung. Ohne eine solche Phasenverschiebung ist die FCB-Suche bei einer positiven Frequenzverstimmung wesentlich schwieriger als bei einer negativen Frequenzverstimmung, da außerhalb des FCBs mehr Einsen als Nullen geschätzt werden. Die Phasenverschiebung um den bevorzugten Winkel α bewirkt eine absichtliche Frequenzverschiebung, und verlagert somit den "Suchpunkt" der FCB-Suche in einen günstigeren Bereich. Wenn beispielsweise α = 22,5° gewählt wird, so ergibt sich eine absichtliche Frequenzverschiebung um -67,71/4 = -17 kHz.

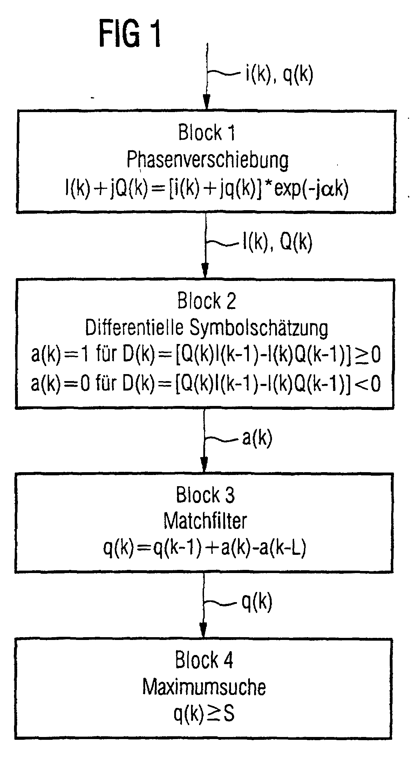

Das Verfahren sei anhand des Blockdiagramms der einzigen Zeichnungsfigur nochmals im Überblick dargestellt.

Im Block 1, dem Mischer, werden die zu den Zeitpunkten k einlaufenden Abtastwerte i(k), q(k) des zu untersuchenden Basisbandsignals um einen Winkel α in der Phase verschoben. Es ergeben sich die phasenverschobenen Abtastwerte I(k), Q(k). Diese Phasenverschiebung läßt sich in der komplexen Schreibweise wie folgt darstellen:

$$I(k)+jQ(k)=[i(k)+jq(k)]*\exp(-j\alpha k).$$

Die phasenverschobenen Abtastwerte I(k) und Q(k) werden nun im Block 2 der eigentlichen differentiellen Symbolschätzung unterzogen. Dabei wird ermittelt, ob die Phasendifferenzen zeitlich aufeinanderfolgender I,Q Abtastwerte im Intervall [0,π), was dem gesendeten Symbol "1" entspricht, oder im Intervall [-π, 0), was dem gesendeten Symbol "0" entspricht, liegen. Diese differentielle Symbolschätzung, bei der für jeden Zeitpunkt k das Vorzeichen der Phasendifferenz berechnet wird, läßt sich in der komplexen Schreibweise wie folgt darstellen:

$$a(k) = 1 \text{ für } D(k)=[Q(k)I(k-1)-I(k)Q(k-1)] \geq 0$$

$$a(k) = 0 \text{ für } D(k)=[Q(k)I(k-1)-1(k)Q(k-1)] < 0$$

Der Wert a(k) wird nun im Block 3 einer Matchfilterung unterzogen. Dabei wird in Form einer gleitenden Summenbildung die Symbolsumme q(k) aus der Summe der Werte in einem Fenster der Länge L gebildet, wie das im einzelnen oben schon beschrieben wurde.

Im Block 4 wird diese Symbolsumme q(k) nun mit einem Schwellwert S verglichen, um zu beurteilen, ob ein FCB vorliegt oder nicht. Bei idealem Signal müßte sich im Suchfenster, wenn dieses die Länge L = 147 aufweist, und dieses vollständig über dem FCB liegt, die Summe 147 aus den 147 Einsen ergeben. Man wird den Schwellwert S jedoch etwas kleiner wählen, so daß einzelne falsche Schätzungen nicht gleich zu einem Nichterkennen eines tatsächlich gesendeten FCBs führen. Wenn die Symbolsumme q(k) größer als der Schwellwert S ist ( q(k) ≥ S ), dann wird signalisiert, daß ein FCB erkannt wurde.

Das erfindungsgemäße Verfahren zur Suche nach Pilottönen, insbesondere zur Suche nach Impulsfolgen, die in Mobilfunksystemen einen Organisationskanal kennzeichnen, bietet gegenüber den aus dem Stand der Technik bekannten Verfahren eine Reihe von Vorteilen, da es einfach zu realisieren und unempfindlich gegenüber Amplitudenschwankungen, schlechten Signal-zu-Rausch-Verhältnissen und Frequenzverstimmungen ist.

**Patentansprüche**

1. Verfahren zur Erkennung einer Impulsfolge, die bekannte Werte (0 oder 1) und eine bekannte Länge (LI) aufweist, in einem Signal, **gekennzeichnet durch** die folgenden Schritte:

   a) Ermitteln, ob die Phasendifferenz aufeinanderfolgender Abtastwerte des Signals im Bereich von [0, $\pi$), was einem gesendeten Symbol "1" (a) entspricht, oder im Bereich von [-$\pi$ ,0) liegt, was einem gesendeten Symbol von "0" (a) entspricht;
   b) Filtern dieser geschätzten Symbole (a), indem ein Suchfenster mit der Suchfensterlänge (L), die gleich der um Eins verminderten Länge (LI) der zu erkennenden Impulsfolge ist, über die aufeinanderfolgend geschätzten Symbole (a) geführt wird, und jedesmal innerhalb des Suchfensters die Symbolsumme (q) der geschätzten Symbole (a) gebildet wird;
   c) Vergleichen der Symbolsumme (q) mit einem Summenschwellwert (S) ; und
   d) wenn die Symbolsumme (q) größer oder gleich dem Summenschwellwert (S) ist, Anzeige des Vorhandenseins der gesuchten Impulsfolge und des zeitlichen Ortes der gesuchten Impulsfolge.

2. Verfahren nach Anspruch 1, **dadurch gekennzeichnet, daß** vor dem Ausführen von Schritt a) die aufeinanderfolgenden Abtastwerte des Signals einer Phasenverschiebung um einen Winkel ($\alpha$) unterworfen werden.

3. Verfahren nach Anspruch 2, **dadurch gekennzeichnet, daß** der Winkel ($\alpha$) der Phasenverschiebung -22,5° beträgt.

4. Verfahren nach einem der vorhergehenden Ansprüche, **dadurch gekennzeichnet, daß** es sich bei der zu erkennenden Impulsfolge um eine Folge von 148 Nullen handelt, mit der in einem Mobilfunksystem ein Organisationskanal gekennzeichnet wird.

5. Verfahren nach einem der vorhergehenden Ansprüche, **dadurch gekennzeichnet, daß** als zeitlicher Ort der gesuchten Impulsfolge der Zeitpunkt angegeben wird, der zwischen den Zeitpunkten liegt, an dem die Symbolsumme (q) zum ersten Mal und an dem sie zum letzten Mal den Summenschwellwert (S) überschreitet.

**Claims**

1. A method for identification of a pulse train, which has known values (0 or 1) and a known length (LI), in a signal, **characterized by** the following steps:

   a) determining whether the phase difference between successive samples of the signal is in the range [0, $\pi$] which corresponds to a transmitted symbol "1" (a) or in the range [-$\pi$,0) which corresponds to a transmitted signal of "0" (a);
   b) filtering these assessed symbols (a), in that a search window whose search window length (L) is equal to the length (LI) of the pulse train to be identified minus one is placed over the successively assessed symbols (a), and the symbol sum (q) of the assessed symbols (e) is formed within each search window;
   c) comparing the symbol sum (q) with a sum threshold value S); and
   d) if the symbol sum (q) is greater than or equal to the sum threshold value (S), indicating the presence of the sought pulse train and the timing of the sought pulse train.

2. The method as claimed in claim 1, **characterized in that**, before carrying out step a), the successive samples of the signal are phase-shifted through an angle ($\alpha$).

3. The method as claimed in claim 2, **characterized in that** the phase-shift angle ($\alpha$) is -22.5°.

4. The method as claimed in one of the preceding claims, **characterized in that** the pulse train to be identified is a train of 148 zeros, which are used to identify an organization channel in a mobile radio system.

5. The method as claimed in one of the preceding claims, **characterized in that** the timing of the sought pulse train is defined as the time between the times at which the symbol sum (q) exceeds the sum threshold value (S) for the first time, and the time at which it exceeds said threshold value (S) for the last time.

**Revendications**

1. Procédé pour la détection d'une séquence d'impulsions, qui a des valeurs connues (0 ou 1) et une longueur connue (LI), dans un signal, **caractérisé par** les étapes suivantes :

 a) on détermine si la différence de phase de valeurs échantillonnées successives du signal se trouve dans le domaine [0, $\pi$), ce qui correspond à un symbole émis "1" (a), ou dans le domaine [- $\pi$, 0), ce qui correspond à un symbole émis "0" (a) ;
 b) on filtre ces symboles estimés (a) en déplaçant une fenêtre de recherche de longueur (L), qui est égale à la longueur (LI) de la séquence d'impulsions à reconnaître diminuée de un, sur les symboles estimés successifs (a) et on forme à chaque fois à l'intérieur de la fenêtre la somme de symboles (q) des symboles estimés (a) ;
 c) on compare la somme de symboles (q) à une valeur de seuil de somme (S) ; et
 d) si la somme de symboles (q) est supérieure ou égale à la valeur de seuil de somme (S), on signale la présence de la séquence d'impulsions recherchée et l'emplacement temporel de la séquence d'impulsions recherchée.

2. Procédé selon la revendication 1, **caractérisé par le fait que**, avant d'exécuter l'étape a), on soumet les valeurs échantillonnées successives du signal à un déphasage d'un angle ($\alpha$).

3. Procédé selon la revendication 2, **caractérisé par le fait que** l'angle ($\alpha$) du déphasage vaut - 22,5°.

4. Procédé selon l'une des revendications précédentes, **caractérisé par le fait que** la séquence d'impulsions à détecter est une suite de 148 zéros avec laquelle est caractérisé un canal d'organisation dans un système de radiocommunication mobile.

5. Procédé selon l'une des revendications précédentes, **caractérisé par le fait que**, comme emplacement temporel de la séquence d'impulsions recherchée, on indique l'instant qui se trouve entre l'instant auquel la somme de symboles (q) dépasse pour la première fois la valeur de seuil de somme (S) et l'instant auquel elle dépasse pour la dernière fois cette même valeur de seuil de somme.

# FIG 1

$i(k), q(k)$

Block 1
Phasenverschiebung
$I(k)+jQ(k)=[i(k)+jq(k)]*exp(-j\alpha k)$

$I(k), Q(k)$

Block 2
Differentielle Symbolschätzung
$a(k)=1$ für $D(k)=[Q(k)I(k-1)-I(k)Q(k-1)]\geq 0$
$a(k)=0$ für $D(k)=[Q(k)I(k-1)-I(k)Q(k-1)]<0$

$a(k)$

Block 3
Matchfilter
$q(k)=q(k-1)+a(k)-a(k-L)$

$q(k)$

Block 4
Maximumsuche
$q(k)\geq S$